# EUROPEAN PATENT APPLICATION

(11) **EP 4 503 856 A1**
(43) Date of publication of application: **05.02.2025**
(21) Application number: 23854984.4
(22) Date of filing: 26.05.2023
(51) Int. Cl.: H05B 6/06, H05B 6/12, H02M 5/458, H02M 1/12

(54) **INDUCTION HEATING DEVICE**

(30) Priority: 17.08.2022 KR 20220102982; 13.10.2022 KR 20220131827
(71) Applicant: Samsung Electronics Co., Ltd., Suwon-si, Gyeonggi-do 16677 (KR)
(72) Inventor: KANG, Hongjoo, Suwon-si, Gyeonggi-do 16677 (KR); BAE, Eundae, Suwon-si, Gyeonggi-do 16677 (KR); HAM, Myoungjin, Suwon-si, Gyeonggi-do 16677 (KR)
(74) Representative: Gulde & Partner
(86) International application number: PCT/KR2023/007269
(87) International publication number: WO 2024/039011

(57) **Abstract**

An induction heating device includes: a power supply module having a first terminal and a second terminal; an inductor connected between the first terminal and the first node; a first switching element connected between the first node and the second node; a first switching element connected between the first node and the second node; a first reverse-parallel diode connected to the first switching element; a second switching element connected between the first node and a ground node; a second reverse-parallel diode connected to the second switching element; a first diode having a cathode connected to the second node and an anode connected to the second terminal; a second diode having a cathode connected to the second terminal and an anode connected to the ground node; a first capacitor connected to the second node and the third node; a second capacitor connected to the third node and the ground node; a third capacitor connected to the second node and the ground node; and a heating coil connected between the first node and the third node.

## Description

### [TECHNICAL FIELD]

The disclosure relates to an induction heating device having an improved circuit configuration.

### [BACKGROUND ART]

In general, an induction heating device is a cooking apparatus that heats and cooks food using the principle of induction heating. An induction heating device includes a cooking plate on which a cooking vessel is placed, and a heating coil that generates a magnetic field when current is applied thereto.

When a current is applied to the heating coil and a magnetic field is generated, a secondary current is induced in the cooking vessel, and Joule heat is generated by a resistance component of the cooking vessel itself. Therefore, the cooking vessel is heated by the high-frequency current and the food contained in the cooking vessel is cooked.

The induction heating device, which uses the cooking vessel itself as a heat source, has a higher heat transfer rate compared to a gas range or kerosene stove that burns fossil fuel and heats a cooking vessel through the heat of combustion, thus generating no harmful gas and no risk of fire.

### [DISCLOSURE]

### [TECHNICAL PROBLEM]

One aspect of the disclosure provides an induction heating device with an improved performance.

### [TECHNICAL SOLUTION]

An induction heating device according to one aspect of embodiment of the disclosure includes: a first node, a second node, and a third node; a power supply module having a first terminal and a second terminal; an inductor connected between the first terminal and the first node; a first switching element connected between the first node and the second node; a first reverse-parallel diode connected to the first switching element; a second switching element connected between the first node and a ground node; a second reverse-parallel diode connected to the second switching element; a first diode having a first cathode connected to the second node and a first anode connected to the second terminal; a second diode having a second cathode connected to the second terminal and a second anode connected to the ground node; a first capacitor connected to the second node and the third node; a second capacitor connected to the third node and the ground node; a third capacitor connected to the second node and the ground node; and a heating coil connected between the first node and the third node.

The induction heating device may further include a current sensor connected between the first node and the third node.

The induction heating device may further include a resistor connected between the first node and the third node.

The power supply module may include an alternating current (AC) power supply and a filter configured to remove noise components included in the AC power supply.

The induction heating device may further include controller configured to control the first switching element and the second switching element.

The controller may be configured to perform a first operation of turning off the first switching element and turning on the second switching element; a second operation of turning off the first switching element and the second switching element; and a third operation of turning on the first switching element and turning off the second switching element.

The controller may be configured to repeatedly perform a sequence of the second operation, the first operation, the third operation, and the second operation.

A first period of the first operation and a third period of the third operation may each be longer than a second period of the second operation.

The controller may be configured to, based on a start of a heating operation, maintain the first switching element and the second switching element in an off state for a predetermined time, and in response to a positive voltage being applied to the first terminal while the first switching element and the second switching element are maintained in the off state, an input current flows through the first terminal, the inductor, the first reverse-parallel diode, the third capacitor, and the second diode sequentially to the second diode.

The controller may be configured to, based on a start of a heating operation, maintain the first switching element and the second switching element in an off state for a predetermined time, and in response to a negative voltage being applied to the first terminal while the first switching element and the second switching element are maintained in the off state, an input current flows through the second terminal, the first diode, the third capacitor, the second reverse-parallel diode, and the inductor sequentially to the second diode.

While a positive voltage is applied to the first terminal and the first operation is performed, an input current may flow through the first terminal, the inductor, the second switching element, and the second diode sequentially to the second terminal, and a resonant current may flow through the third node, the heating coil and the second switching element sequentially to the ground node.

While a positive voltage is applied to the first terminal and the second operation is performed, an input current may flow through the first terminal, the inductor, the first reverse-parallel diode, the third capacitor, and the second diode sequentially to the second terminal, and a resonant current may flow through the third node, the heating coil and the first reverse-parallel diode sequentially to the second node.

While a positive voltage is applied to the first terminal and the third operation is performed, an input current may flow through the first terminal, the inductor, the heating coil, the second capacitor, and the second diode sequentially to the second terminal, and a resonant current may flow through the second node, the first switching element, and the heating coil sequentially to the third node.

While a positive voltage is applied to the first terminal and the third operation is performed, a resonant current may flow through the second node, the first switching element, and the heating coil sequentially to the third node in a state in which an input current may not flow.

While a positive voltage is applied to the first terminal and the second operation is performed, an input current may flow through the first terminal, the inductor, the heating coil, the first capacitor, the third capacitor, and the second diode sequentially to the second terminal, and a resonant current may flow through the ground node, the second switching element, and the heating coil sequentially to the third node.

While a negative is applied to the first terminal and the first operation is performed, an input current may flow through the second terminal, the first diode, the first capacitor, the heating coil, and the inductor sequentially to the first terminal, and a resonant current may flow through the third node, the heating coil and the second switching element sequentially to the ground node.

While a negative is applied to the first terminal and the first operation is performed, a resonant current may flow through the third node, the heating coil, and the second switching element sequentially to the ground node in a state in which an input current may not flow.

While a negative voltage is applied to the first terminal and the second operation is performed, an input current may flow through the second terminal, the first diode, the first capacitor, the heating coil, and the inductor sequentially to the first terminal, and a resonant current may flow through the third node, the heating coil and the first switching element sequentially to the second node.

While a negative voltage is applied to the first terminal and the third operation is performed, an input current may flow through the second terminal, the first diode, the first switching element, and the inductor sequentially to the first terminal, and a resonant current may flow through the second node, the first switching element and the heating coil sequentially to the third node.

While a negative voltage is applied to the first terminal and the second operation is performed, an input current may flow through the second terminal, the first diode, the third capacitor, the second reverse-parallel diode and the inductor sequentially to the first terminal, and a resonant current may flow through the ground node, the second reverse-parallel diode and the heating coil sequentially to the third node.

### [ADVANTAGEOUS EFFECTS]

According to one aspect of the disclosure, noise generated during operation of the induction heating device can be suppressed.

According to one aspect of the disclosure, the heating performance of a small-sized cooking vessel or a cooking vessel formed of a material having low magnetic permeability can be improved.

### [DESCRIPTION OF DRAWINGS]

FIG. 1 is a diagram illustrating the appearance of an induction heating device according to an embodiment.
FIGS. 2 and 3 are diagrams for describing a heating principle of an induction heating device according to an exemplary embodiment.
FIG. 4 is a block diagram illustrating the configuration of an induction heating device according to an embodiment.
FIG. 5 is a diagram illustrating an example of a coil driving circuit according to an embodiment.
FIG. 6 is a diagram illustrating a change in current according to an operation of a first switching element and a second switching element over time when a positive voltage is applied to a first terminal.
FIG. 7 is a diagram illustrating a change in current according to an operation of a first switching element and a second switching element over time when a negative voltage is applied to a first terminal.
FIG. 8 is a diagram schematically illustrating a flow of current when a positive voltage is applied to a first terminal in a state in which a first switching element and a second switching element are in an off state.
FIG. 9 is a diagram schematically illustrating a flow of current when a negative voltage is applied to a first terminal in a state in which a first switching element and a second switching element are in an off state.
FIG. 10 is a view schematically illustrating a flow of current in a first mode of FIG. 6.
FIG. 11 is a view schematically illustrating a flow of current in a second mode of FIG. 6.
FIG. 12 is a view schematically illustrating a flow of current in a third mode of FIG. 6.
FIG. 13 is a view schematically illustrating a flow of current in a fourth mode of FIG. 6.
FIG. 14 is a view schematically illustrating a flow of current in a fifth mode of FIG. 6.
FIG. 15 is a view schematically illustrating a flow of current in a sixth mode of FIG. 7.
FIG. 16 is a view schematically illustrating a flow of current in a seventh mode of FIG. 7.
FIG. 17 is a view schematically illustrating a flow of current in an eighth mode of FIG. 7.
FIG. 18 is a view schematically illustrating a flow of current in a ninth mode of FIG. 7.
FIG. 19 is a view schematically illustrating a flow of current in a tenth mode of FIG. 7.

### [MODES OF THE DISCLOSURE]

The embodiments described in the present specification and the configurations shown in the drawings are only examples of preferred embodiments of the present disclosure, and various modifications may be made at the time of filing of the present disclosure to replace the embodiments and drawings of the present specification.

The terms used herein are for the purpose of describing the embodiments and are not intended to restrict and/or to limit the present disclosure.

For example, the singular expressions herein may include plural expressions, unless the context clearly dictates otherwise.

In addition, the terms "comprises" and "has" are intended to indicate that there are features, numbers, steps, operations, elements, parts, or combinations thereof described in the specification, and do not exclude the presence or addition of one or more other features, numbers, steps, operations, elements, parts, or combinations thereof.

It will be understood that, although the terms first, second, etc. may be used herein to describe various components, these components should not be limited by these terms. These terms are only used to distinguish one component from another.

The terms, such as "~ part", "-device", "-block", "-member", "~ module", and the like may refer to a unit for processing at least one function or act. For example, the terms may refer to at least process processed by at least one hardware, such as field-programmable gate array (FPGA)/ application specific integrated circuit (ASIC), software stored in memories, or processors.

Hereinafter, an embodiment of the disclosed disclosure will be described in detail with reference to the accompanying drawings. Identical symbols or numbers in the drawings of the present disclosure denote components or elements configured to perform substantially identical functions.

Hereinafter, the working principle and embodiments of the present disclosure will be described with reference to the accompanying drawings.

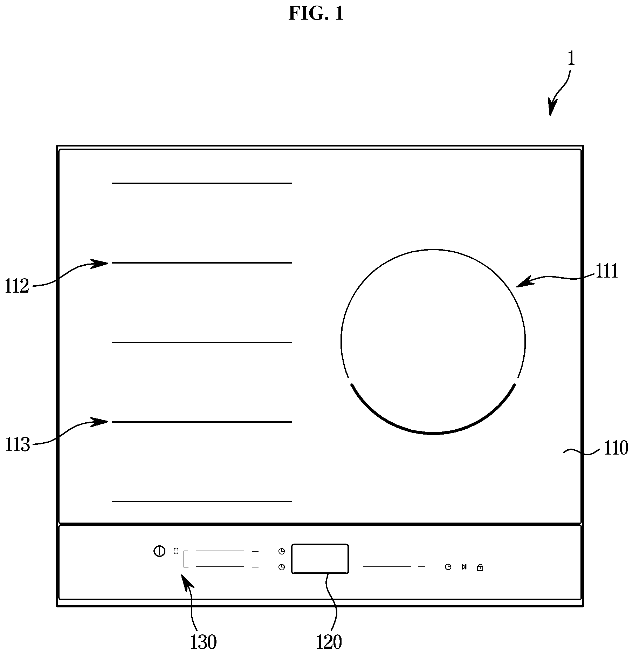

FIG. 1 is a diagram illustrating the appearance of an induction heating device according to an embodiment.

In FIG. 1, a top view of an induction heating device 1 according to an embodiment is illustrated. Referring to FIG. 1, the induction heating device 1 according to an embodiment may include a plate 110provided on an upper portion thereof, cooking zones 111, 112, and 113 formed on the plate 110, and user interfaces 120 and 130 serving as input/output devices. For example, the plate 110 may be implemented with ceramic.

The cooking zones 111, 112, and 113 may represent positions in which the cooking vessels may be placed, and may be indicated in a circular shape (denoted by a reference numeral 111) or in a straight boundary line (denoted by reference numerals 112 and 113) to guide proper arrangement of the cooking vessels.

However, the above-described shapes are only examples of shapes for representing the cooking zones 111, 112, and 113, and without being limited to a circular or straight shape, various shapes may be applied to embodiments of the induction heating device 1 as long as it can guide the user to the position of the cooking zone.

In addition, the present example is illustrated as having three cooking zones on the plate 110, but the embodiment of the induction heating device 1 is not limited thereto. Only one cooking zone may be formed, and four or more cooking zones may be formed.

In one area of the plate 110, a display 120 and an input device 130 may be provided. The display 120 may include a display device, such as an liquid crystal display (LCD) or an light emitting diode (LED), and the input device 130 may include at least one of various input devices, such as a touch pad, a button, or a jog shuttle. Alternatively, the display 120 and the input device 130 may be implemented as a touch screen.

In the present example, a case in which the display 120 and the input device 130 are provided at positions spaced apart from the cooking zones 111, 112, and 113 on the plate 110 is illustrated. However, the arrangement shown in FIG. 1 is only an example applicable to the induction heating device 1, and the display 120 or input device 130 may be placed at a position other than on the plate 110, such as the front of a heating cooking device 100.

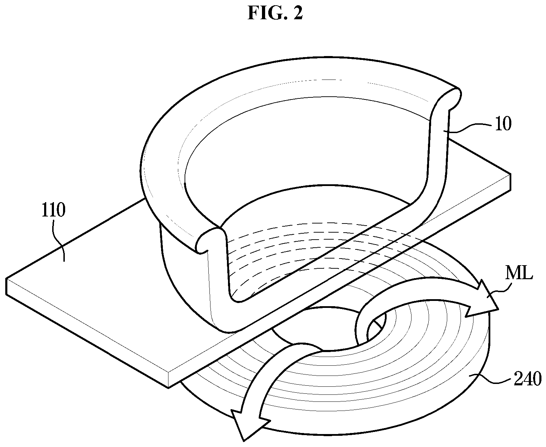

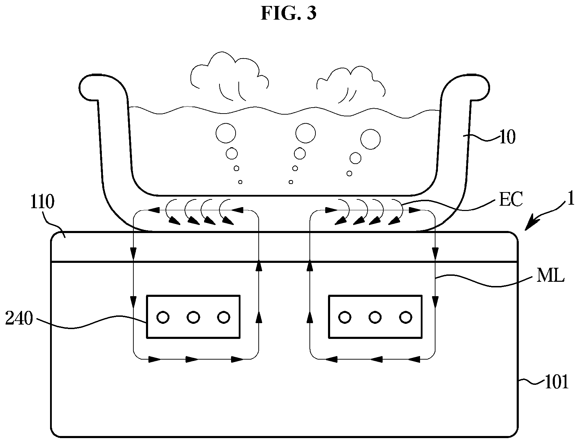

Referring to FIGS. 2 and 3 in conjunction with FIG. 1, a heating coil 240 used to heat the vessel 10 placed on the plate 110 may be disposed below the plate 110. For the sake of convenience of description, only one heating coil 240 is illustrated in FIGS. 2 and 3, but the heating coil 240 may be provided corresponding in number to the number of cooking zones.

When three cooking zones 111, 112, and 113 are provided as shown in the example of FIG. 1, the heating coil 240 may be provided as three heating coils 240, and each of the heating coils 240 may be placed on a lower side of a corresponding one of the cooking zones 111, 112, and 113.

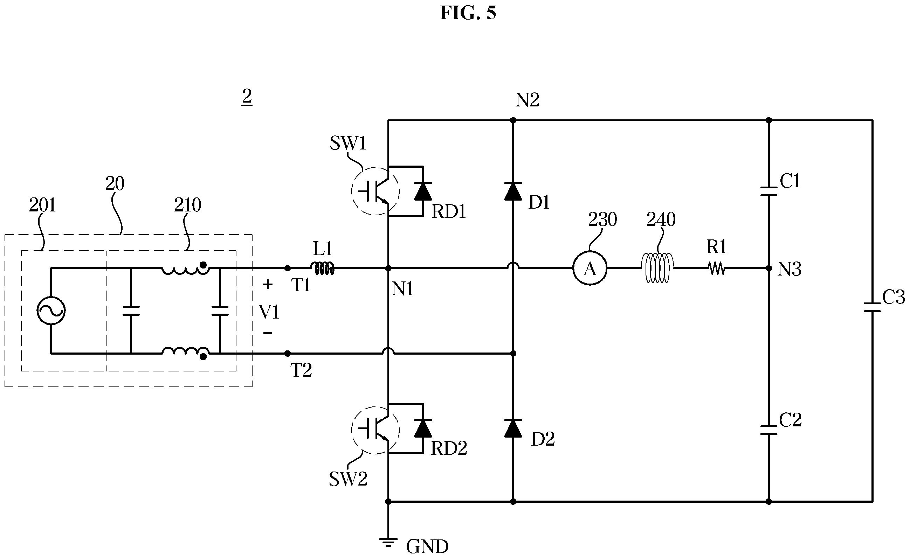

The heating coil 240 may be connected to a coil driving circuit (2 in FIG. 5) to be described below, and may be supplied with a high-frequency current from the coil driving circuit 2. For example, the frequency of the high frequency current may be in a range of 20 kHz to 35 kHz.

When the heating coil 240 is supplied with a high frequency current, lines of magnetic force ML may be formed in or about the heating coil 240. When the vessel 10 having resistance is located within a range which the lines of magnetic force ML reach, the lines of magnetic force ML around the heating coil 240 may pass through the bottom of the vessel 10, generating an induced current in the form of a vortex according to the law of electromagnetic induction, that is, eddy currents (EC).

The eddy current EC may interact with the electrical resistance of the vessel 10, generating heat in or on the vessel 10, and the generated heat may heat the food inside the vessel 10.

In the induction heating device 1, the vessel 10 itself acts as a heat source, and a metal having a resistance of a certain level or higher, such as iron, stainless steel, or nickel, may be used as a material of the vessel 10.

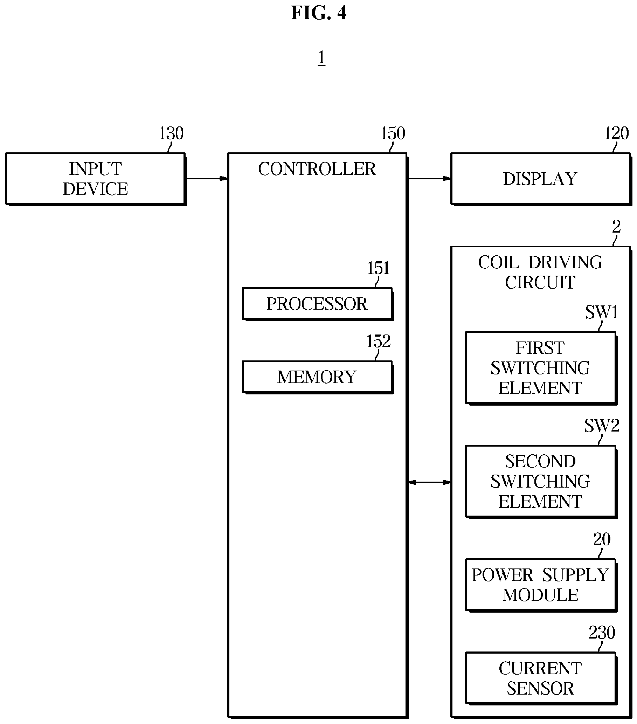

FIG. 4 is a block diagram illustrating the configuration of an induction heating device according to an embodiment.

Referring to FIG. 4, the induction heating device 1 according to an embodiment may include a coil driving circuit 2 for supplying a driving current to the heating coil 240 described above.

The coil driving circuit 2 may include a power supply module 20 that supplies power for heating the vessel 10 to the heating coil 240 and a circuit configuration for converting the power supplied from the power supply module 20 into an alternating current and supplying the alternating current to the heating coil 240.

In one embodiment, the coil driving circuit 2 may include a first switching element SW1 and a second switching element SW2 for supplying power supplied from the power supply module 20 to the heating coil 240.

The first switching element SW1 and the second switching element SW2 may operate in a complementary manner to allow an alternating current to flow through the heating coil 240.

The first switching element SW1 and the second switching element SW2 may be turned on/off by switch driving signals. In this case, the switch driving signals may be provided by a controller 150, and the controller 150 may alternately turn on/off the first switching element SW1 and the second switching element SW2, thereby supplying the heating coil 240 with a high-frequency alternating current.

The first switching element SW1 and the second switching element SW2 may be implemented as a three-terminal semiconductor device switch having a fast response speed so as to be turned on/off at a high speed. For example, the first switching element SW1 and the second switching element SW2 may be provided as a bipolar junction transistor (BJT), a metal-oxide-semiconductor field effect transistor (MOSFET), an insulated gate bipolar transistor (IGBT) or a thyristor.

In addition, the coil driving circuit 2 may include a current sensor 230 that detects a current supplied to the heating coil 240.

On a current path between a contact point of the first switching element SW1 and the second switching element SW2 and the heating coil 240, a current sensor 230 may be installed. The current sensor 230 may detect the magnitude of a current flowing through the heating coil 240 or the magnitude of a driving current supplied to the heating coil 240.

The current sensor 230 may include a current transformer configured to proportionally reduce the magnitude of a driving current supplied to the heating coil 240 and an ampere meter configured to detect the magnitude of the proportionally reduced current.

Information about the magnitude of the current detected by the current sensor 230 may be provided to the controller 150. The controller 150 may adjust the magnitude of a high-frequency current applied to the heating coil 240 based on the information about the magnitude of the detected current.

In addition, the controller 150 may identify whether a vessel 10 is located on the heating coil 240 based on the information about the magnitude of the detected current. For example, it may be identified that a vessel 10 is located on the heating coil 240 in response to the magnitude of the detected current being lower than a reference value. Conversely, the controller 150 may identify that a vessel 10 is not located on the heating coil 240 in response to the magnitude of the detected current being greater than or equal to the reference value.

The controller 150 may, upon identifying that a vessel 10 is not located on the heating coil 240 while the high frequency current is being applied to the heating coil 240, cut off the high frequency current applied to the heating coil 240 so that the stability of the induction heating device 1 may be improved.

Meanwhile, the controller 150 may identify whether a vessel 10 is located on the heating coil 240 before performing an operation of applying a high frequency current to the heating coil 240, that is, before entering a heating mode, and upon identifying that a vessel 10 is not located on the heating coil 240, prevent the high frequency current from being applied to the heating coil 240. That is, a high-frequency current may be applied to the heating coil 240 only when the vessel 10 is located on the heating coil 240.

In addition, the induction heating device 1 according to the embodiment may include a controller 150 configured to control the operation of the induction heating device 1. The controller 150 may include at least one memory 152 in which a program for performing an operation described below is stored and at least one processor 151 configured to execute the stored program.

The at least one processor 151 may include a microprocessor. A microprocessor is a processing device in which an arithmetic logic operator, a register, a program counter, a command decoder, a control circuit, and the like are provided in at least one silicon chip.

The microprocessor may include a graphic processing unit (GPU). The microprocessor may be implemented in the form of a system on chip (SoC) including a core and a GPU. The microprocessor may include a single core, a dual core, a triple core, a quad core, and a core of multiples thereof.

In addition, the at least one processor 151 may include an input/output processor configured to mediate data access between various components included in the induction heating device 1 and the controller 150.

The at least one memory 152 may include a non-volatile memory, such as a read only memory (ROM), a high-speed random access memory (RAM), a magnetic disk storage device, or a flash memory device, or other types of non-volatile semiconductor memory devices.

For example, the at least one memory 152 may be a semiconductor memory device, including at least one of a Secure Digital (SD) memory card, a Secure Digital High Capacity (SDHC) memory card, a mini SD memory card, a mini SDHC memory card, a Trans Flash (TF) memory card, a micro SD memory card, a micro SDHC memory card, a memory stick, a Compact Flash (CF), a Multi-Media Card (MMC), an MMC micro, or an eXtreme Digital (XD) card.

In addition, the at least one memory 152 may include a network attached storage device that allows an access through a network.

The controller 150 may control the induction heating device 1 based on a user input received through the input device 130. For example, the input device 130 may receive a user input related to power on/off, selection of one or more of the cooking zones 111, 112, and 113, selection of a heating intensity of the selected cooking zone(s), setting of a timer, and the like.

For example, the controller 150 may select a heating coil 240 to be supplied with high-frequency power according to a selection of a cooking zone received by the input device 130, and may adjust the intensity of a magnetic field generated by the heating coil 240 according to a selection of the heating intensity received by the input device 130. In configurations having a single cooking zone, a heating intensity may be directly selected without selecting a cooking zone.

When the input device 130 receives a selection for the heating intensity from the user, the controller 150 may determine on/off frequencies of the first switching element SW1 and the second switching element SW1 based on the selected heating intensity. The controller 150 may alternately turn on/off the firs switching element SW1 and the second switching element SW1 according to the determined on/off frequency, thereby applying, to the heating coil 240, a high-frequency current having a frequency corresponding to the selected heating intensity.

When the input device 130 receives a selection for starting heating from the user, the controller 150 may control the power supply module 20 such that power of the power supply module 20 is supplied to the coil driving circuit 2.

The display 120 may display information about the current state of the induction heating device 1, information for guiding selection of one or more cooking zones and/or heating intensity, and information for guiding timer setting. In addition, the display 120 may display a notification indicating whether a vessel 10 is present.

FIG. 5 is a diagram illustrating an example of a coil driving circuit according to an embodiment.

Referring to FIG. 5, the coil driving circuit 2 according to an embodiment may include a power supply module 20, an inverter circuit including a first switching element SW1 and a second switching element SW2, at least one inductor L1, at least one diode D1, D2, RD1, and RD2, at least one capacitor C1, C2, and C3, and at least one node N1, N2, and N3 for defining a positional relationship of at least one electrical element.

The power supply module 20 may include a power supply 201 that supplies or blocks AC power to the circuit configuration and a filter 210 that removes noise components included in the power supplied from the power supply 201.

The controller 150 may turn on or off the power supply 201 based on a user input received through the input device 130.

According to various embodiments, the controller 150 may turn off the power supply 201 based on a preset condition being satisfied, regardless of a user input.

For example, the controller 150 may turn on the power supply 201 based on receiving a heating start command, and turn off the power supply 201 based on no vessel being detected on the heating coil 240 for a preset time.

The filter 210 may be composed of a transformer and a capacitor and may remove noise mixed with power supplied from the power supply 201.

In the present disclosure, the power supply module 20 may be defined as a configuration that does not include a rectifier for converting AC voltage to DC voltage.

The power supply module 20 may have a first terminal T1 and a second terminal T2.

According to the AC voltage supplied from the power supply module 20, a potential difference may be formed between the first terminal T1 and the second terminal T2. That is, the first terminal T1 and the second terminal T2 may be supplied with AC power.

The first terminal T1 and the second terminal T2 may be directly connected to the power supply 201 or may be directly connected to the filter 210.

A potential difference V1 formed between the first terminal T1 and the second terminal T2 may be defined as an input voltage, and the fact that the input voltage V1 has a positive (+) value is taken to mean that the first terminal T1 may have a potential higher than that of the second terminal T2, and the fact that the input voltage V1 has a negative (-) value is taken to mean that the second terminal T2 may have a potential higher than that of the first terminal T1.

That is, the fact that the first terminal T1 is supplied with a positive voltage is taken to mean that that the potential of the first terminal T1 is higher than that of the second terminal T2, and the fact that the first terminal T1 is supplied with a negative voltage is taken to mean that the potential of the second terminal T2 is higher than that of the first terminal T1.

The coil driving circuit 2 may include the first node N1, the second node N2, and the third node N3.

The first node N1 may refer to a contact point between the first switching element SW1 and the second switching element SW2.

For example, the first node N1 may refer to a node between a source terminal (or an emitter terminal) of the first switching element SW1 and a drain terminal (or a collector terminal) of the second switching element SW2.

The inductor L1 may be connected between the first terminal T1 and the first node N1.

The second node N2 may refer to a node of a drain terminal (or a collector terminal) of the first switching element SW1.

In addition, the second node N2 may refer to a node on a cathode side of the first diode D1.

The first switching element SW1 may be connected between the first node N1 and the second node N2.

The first reverse-parallel diode RD1 may be connected in parallel with the first switching element SW 1.

The first reverse-parallel diode RD1 may have a cathode connected to the second node N2 and an anode connected to the first node N1.

The second switching element SW2 may be connected between the first node N1 and the ground node GND.

The ground node GND may refer to a node on a grounded side.

The second reverse-parallel diode RD2 may be connected in parallel with the second switching element SW2.

The second reverse-parallel diode RD2 may have a cathode connected to the first node N1 and an anode connected to the ground node GND.

The first diode D1 may have an anode connected to the cathode of the second diode D2, and the anode of the first diode D1 and the cathode of the second diode D2 may be connected to the second terminal T2.

The first diode D1 may be connected to the second node N2 and the second terminal T2.

That is, the first diode D1 may have a cathode connected to the second node N2 and an anode connected to the second terminal T2.

The second diode D2 may be connected to the second terminal T2 and the ground node GND.

That is, the cathode of the second diode D2 may be connected to the second terminal T2, and the anode of the second diode D2 may be connected to the ground node GND.

The third node N3 may refer to a node between the first capacitor C1 and the second capacitor C2.

The heating coil 240 may be provided between the first node N1 and the third node N3.

The first capacitor C1 may be connected to the second node N2 and the third node N3.

The second capacitor C2 may be connected to the third node N3 and the ground node GND.

The third capacitor C3 may be connected to the second node N2 and the ground node GND.

Accordingly, the first capacitor C1 and the second capacitor C2 may form a parallel relationship with the third capacitor C3.

A circuit configuration included in a conventional induction heating device allows a DC voltage, which has been converted through a rectifier, to pass through an inverter circuit and then to be supplied to a heating coil.

On the other hand, the coil driving circuit 2 according to an embodiment has a structure similar to a totem pole topology. In addition, the coil driving circuit 2 may include a third capacitor C3 connected in parallel with the first capacitor C1 and the second capacitor C2.

According to the present disclosure, the output may be increased when using a vessel with low magnetic permeability. In addition, according to the present disclosure, noise generated when a high frequency current is applied to the heating coil 240 may be reduced.

Between the first node N1 and the third node N3, a current sensor 230 may be provided to measure the current applied to the heating coil 240.

In addition, a resistor R1 may be provided between the first node N1 and the third node N3.

The resistor R1 may have an appropriate resistance value according to capacitances of the capacitors C1, C2, and C3.

Hereinafter, the flow of current according to the switching operation of the switching elements SW1 and SW2 will be described.

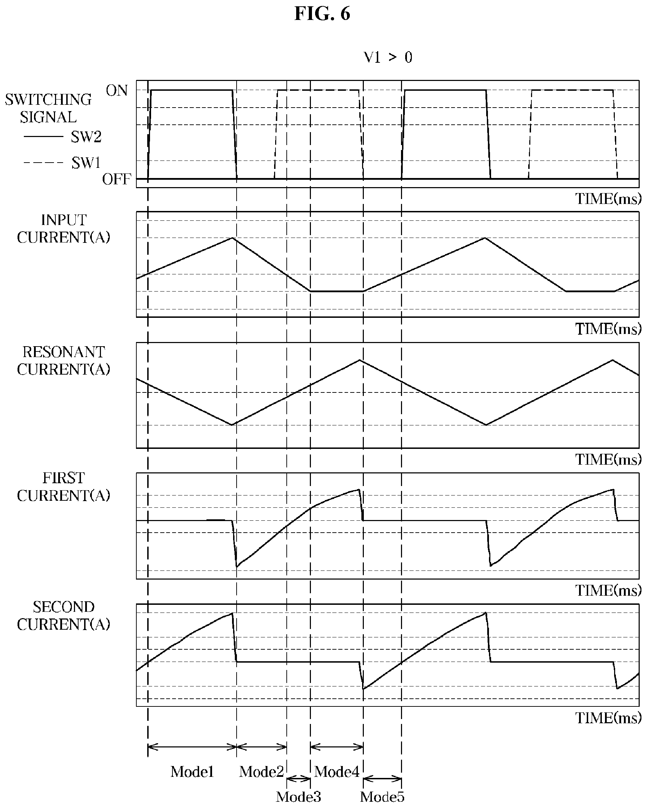

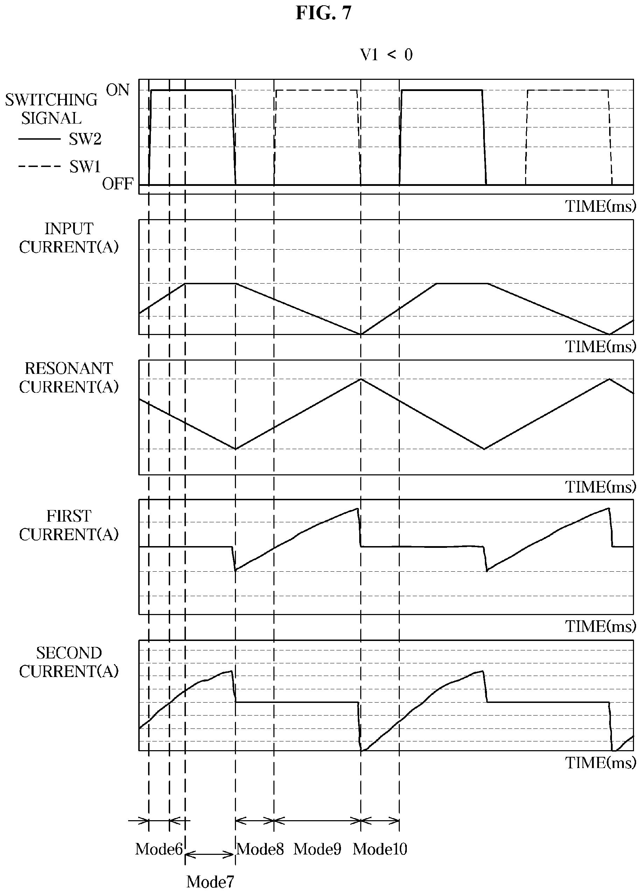

FIG. 6 is a diagram illustrating a change in current according to an operation of a first switching element and a second switching element over time when a positive voltage is applied to a first terminal. FIG. 7 is a diagram illustrating a change in current according to an operation of a first switching element and a second switching element over time when a negative voltage is applied to a first terminal.

Referring to FIGS. 6 and 7, in a heating mode, the controller 150 may operate the first switching element SW1 and the second switching element SW2 in a complementary manner.

In addition, the controller 150 may turn off both the first switching element SW1 and the second switching element SW2.

In one embodiment, the controller 150 may perform a first operation of turning off the first switching element SW1 and turning on the second switching element SW2 for a preset time, and may perform a second operation of turning off both the first switching element SW1 for a preset time, and may perform a third operation of turning on the first switching element SW1 and turning off the second switching element SW2 for a preset time.

The controller 150 may perform the first operation by outputting a switching signal for turning off the first switching element SW1 and outputting a switch signal for turning on the second switching element SW2.

In addition, the controller 150 may perform the second operation by outputting a switching signal for turning off the first switching element SW1 and outputting a switch signal for turning off the second switching element SW2.

In addition, the controller 150 may perform the third operation by outputting a switching signal for turning on the first switching element SW1 and outputting a switch signal for turning off the second switching element SW2.

In one embodiment, the controller 150 may repeatedly perform the first operation, the second operation, the third operation, and the second operation.

In this case, the execution period of the first operation may be the same as the execution period of the third operation.

In addition, the execution period of the first operation and/or the execution period of the third operation may be longer than the execution period of the second operation.

Referring to FIG. 6, when a positive voltage is applied to the first terminal T1, the current flow of the coil driving circuit 2 may be classified into a plurality of modes according to the switching operation of the switching elements SW1 and SW2.

An input current may refer to a current flowing from the first terminal T1 to the second terminal T2.

A sign of the input current may represent the direction of the current.

When the input current has a positive value, the input current may have a direction (hereinafter referred to as "forward direction") flowing from the first terminal T1 to the second terminal T2. Conversely, when the input current has a negative value, the input current may have a direction (hereinafter referred to as "reverse direction") flowing from the second terminal T2 to the first terminal T1.

A resonance current may refer to a current flowing from the first node N1 to the third node N3.

A sign of the resonant current may represent the direction of the current.

When the resonance current has a positive value, the resonance current may have a direction (hereinafter referred to as "forward direction") flowing from the first node N1 to the third node N3. Conversely, when the resonance current has a negative value, the resonance current may have a direction (hereinafter referred to as "reverse direction") flowing from the third node N3 to the first node N1.

A first current may refer to a current flowing through the first switching element SW1 or the first reverse-parallel diode RD1, and may refer to a current flowing from the second node N2 to the first node N1.

A sign of the first current may represent the direction of the current.

When the first current has a positive value, the current may have a direction (hereinafter referred to as "forward direction") flowing through the second node N2 and the first switching element SW1 sequentially to the first node N1. Conversely, when the first current has a negative value, the current may have a direction (hereinafter referred to as "reverse direction") flowing through the first node N1 and the first reverse-parallel diode RD1 sequentially to the second node N2.

A second current may refer to a current flowing through the second switching element SW2 or the second reverse-parallel diode RD2, and may refer to a current flowing from the first node N1 to the ground node GND.

A sign of the second current may represent the direction of the current.

When the second current has a positive value, the current may have a direction (hereinafter referred to as "forward direction") flowing through the first node N1 and the second switching element SW2 sequentially to the ground node GND. Conversely, when the second current has a negative value, the current may have a direction (hereinafter referred to as "reverse direction") flowing through the ground node GND and the second reverse-parallel diode RD2 sequentially to the first node N1.

When a positive voltage is applied to the first terminal T1 and the controller 150 repeatedly performs the first operation, the second operation, the third operation, and the second operation, the flow of current in the coil driving circuit 2 may be classified into five aspects.

The five aspects of current flow when a positive voltage is applied to the first terminal T1 may be defined as first to fifth modes.

### [First Mode]

It can be seen that in response to the controller 150 performing the first operation, the input current in the forward direction gradually increases, the resonance current in the reverse direction gradually increases, and the second current in the forward direction gradually increases.

### [Second Mode]

It can be seen that in response to the controller 150 performing the second operation after completing the first operation, the flow of the second current stops, the input current in the forward direction gradually decreases, the resonance current in the reverse direction gradually decreases, and the first operation in the reverse direction gradually decreased.

In addition, the second mode may be maintained for a part of a period during which the controller 150 performs the third operation after completion of the second operation.

### [Third mode]

In response to the controller 150 performing the third operation for a predetermined time after completion of the second operation, the direction of the resonance current and the direction of the first current may be switched.

During a part of a period while the controller 150 is performing the third operation, the input current in the forward direction may gradually decrease, the resonance current in the forward direction may gradually increase, and the first current in the forward direction may gradually increase.

### [Fourth mode]

When a predetermined time has elapsed after the controller 150 starts the third operation, the flow of the input current may stop.

During a part of a period while the controller 150 is performing the third operation, the input current may not flow, the resonance current in the forward direction may gradually increase, and the first current in the forward direction may gradually increase.

### [Fifth Mode]

In response to the controller 150 performing the second operation after completion of the third operation, the flow of the first current may stop, and the second current in the reverse direction may flow.

In response to the controller 150 performing the second operation after completion of the third operation, the input current in the forward direction may gradually increase, the resonance current in the forward direction may gradually decrease, and the second current in the reverse direction may gradually decrease.

Referring to FIG. 7, when a negative voltage is applied to the first terminal T1, the flow of current in the coil driving circuit 2 may be classified into a plurality of modes according to the switching operation of the switching elements SW1 and SW2.

When a negative voltage is applied to the first terminal T1 and the controller 150 repeatedly performs the first operation, the second operation, the third operation, and the second operation, the flow of current in the coil driving circuit 2 may be classified into five aspects.

The five aspects of current flow when a negative voltage is applied to the first terminal T1 may be defined as sixth to tenth modes.

### [Sixth Mode]

In response that the controller 150 starts the first operation, the input current in the reverse direction may gradually decrease, the direction of the resonance current may be switched from the forward direction to the reverse direction, and the direction of the second current may be switched from the reverse direction to the forward direction.

### [Seventh Mode]

When a predetermined time has elapsed after the controller 150 starts the first operation, the flow of the input current may stop.

During a part of a period while the controller 150 is performing the first operation, the input current may not flow, the resonance current in the reverse direction may gradually increase, and the second current in the forward direction may gradually increase.

### [Eighth Mode]

In response to the controller 150 performing the second operation after completion of the first operation, the input current may start to flow, the flow of the second current may stop, and the first current in the reverse direction may flow.

In response to the controller 150 performing the second operation after completion of the first operation, the input current in the reverse direction may gradually increase, the resonance current in the reverse direction may gradually decrease, and the first current in the reverse direction may gradually decrease.

### [Ninth Mode]

In response to the controller 150 starting the third operation after completion of the second operation, the direction of the resonance current and the direction of the first current may be switched.

While the controller 150 is performing the third operation, the input current in the reverse direction may gradually increase, the resonance current in the forward direction may gradually increase, and the first current in the forward direction may gradually increase.

### [Tenth Mode]

In response to the controller 150 performing the second operation after completion of the third operation, the flow of the first current stops and the second current in the reverse direction may flow.

In response to the controller 150 performing the second operation after completion of the third operation, the input current in the reverse direction may gradually decrease, the resonance current in the forward direction may gradually decrease, and the second current in the reverse direction may gradually decrease.

Referring to FIGS. 6 and 7, the third capacitor C3 provides an effect of smoothing the resonance current.

Accordingly, noise generated when the high frequency current is applied to the heating coil 240 may be reduced.

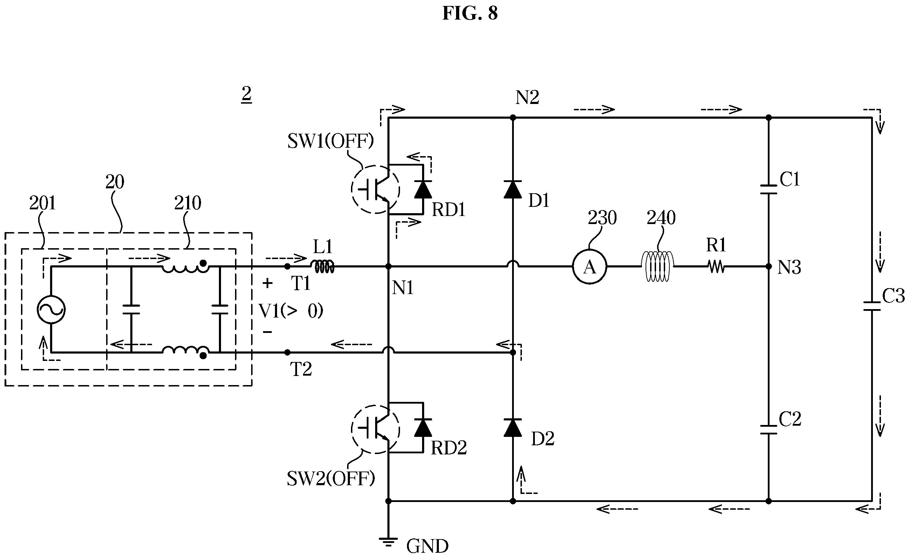

Hereinafter, the flow of current in the coil driving circuit 2 according to the switching operation will be described in more detail with reference to FIGS. 8 to 19.

FIG. 8 is a diagram schematically illustrating a flow of current when a positive voltage is applied to a first terminal in a state in which a first switching element and a second switching element are in an off state.

The controller 150 may, based on a start of a heating operation, control the power supply module to supply the coil driving circuit 2 with power.

In one embodiment, the controller 150 may start a heating operation based on receiving a user input for starting heating.

In one embodiment, the controller 150 may not perform a switching operation for a predetermined time after the heating operation has started. That is, the controller 150 may maintain the first switching element SW1 and the second switching element SW2 in an off state for a predetermined time after the heating operation has started.

Referring to FIG. 8, in response to a positive voltage being applied to the first terminal T1 while the first switching element SW1 and the second switching element SW2 are maintained in an off state, the input current may flow through the first terminal T1, the inductor L1, the first reverse-parallel diode RD1, the third capacitor C3, and the second diode D2 sequentially to the second terminal T2.

Accordingly, in response to a positive voltage being applied to the first terminal T1 while the first switching element SW1 and the second switching element SW2 are maintained in an off state, the third capacitor C3 may be charged.

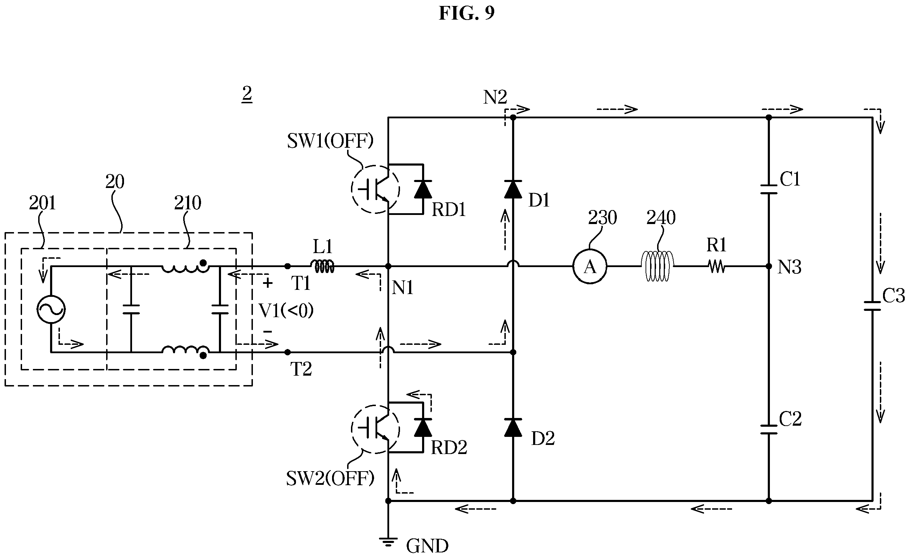

FIG. 9 is a diagram schematically illustrating a flow of current when a negative voltage is applied to a first terminal T1 in a state in which a first switching element and a second switching element are in an off state.

Referring to FIG. 9, in response to a negative voltage being applied to the first terminal T1 while the first switching element SW1 and the second switching element SW2 are maintained in an off state, the input current may flow through the second terminal T2, the first diode D1, the third capacitor C3, the second reverse-parallel diode RD2 and the inductor L1 sequentially to the first terminal T1.

Accordingly, in response to a negative voltage being applied to the first terminal T1 while the first switching element SW1 and the second switching element SW2 are maintained in an off state, the third capacitor C3 may be charged.

According to the present disclosure, in response to power being supplied from the power supply module 20 before the switching operation starts after the heating operation has started, the third capacitor C3 may be charged.

As described above, the controller 150 may perform the first operation, the second operation, and the third operation based on the start of the heating operation. In one embodiment, the controller 150 may maintain the first switching element SW1 and the second switching element SW2 in an off state for a predetermined time after the heating operation has started, and then start a switching operation based on the predetermined time elapsing.

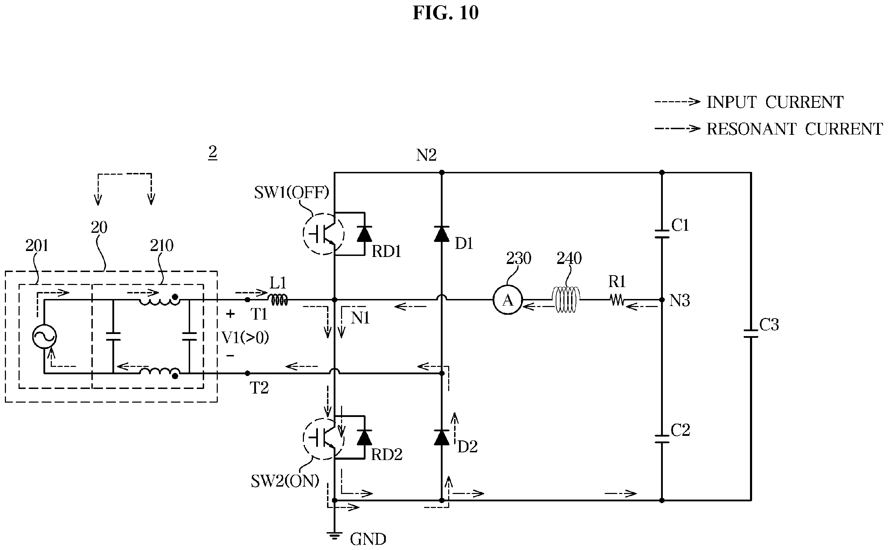

FIG. 10 is a view schematically illustrating a flow of current in a first mode of FIG. 6.

Referring to FIG. 10, while a positive voltage is applied to the first terminal T1 and the first operation is performed, an input current may flow through the first terminal T1, the inductor L1, the second switching element SW2, and the second diode D2 sequentially to the second terminal T2, and a resonant current may flow through the third node N3, the heating coil, and the second switching element SW2 sequentially to the ground node GND.

In the first mode, due to the charging of the third capacitor C3 being completed before the switching operation starts, a condition that the voltage charged in the third capacitor C3 is greater than the voltage at the first node N1 is satisfied. Since the voltage charged in the third capacitor C3 is greater than the voltage at the first node N1, the first reverse-parallel diode RD1 is not conducted, and a current path flowing to the second switching element SW2 is formed. Accordingly, the input current flows through the first terminal T1, the inductor L1, the second switching element SW2 and the second diode D2 sequentially to the second terminal T2.

In the first mode, the resonant current charged in the first capacitor C1 and the heating coil flows through the second switching element SW2 until is the resonant current is discharged according to the current inertia of the inductor L1.

That is, in the first mode, the resonance current may flow through the third node N3, the heating coil and the second switching element SW2 sequentially to the ground node GND.

Accordingly, a resonant current in the reverse direction flows through the heating coil.

In summary, since both the input current and the resonance current flow through the second switching element SW2, the second switching element SW2 needs to have a current capacity sufficient to allow both the input current and the resonance current to flow at once.

The controller 150 may perform the first operation for a preset time and then perform the second operation. In this case, the execution period of the first operation may be longer than the execution period of the second operation.

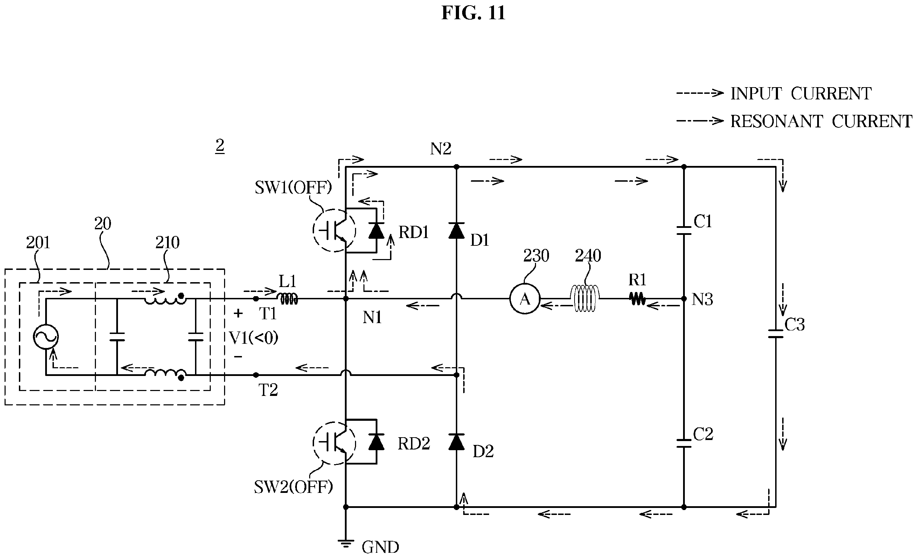

FIG. 11 is a view schematically illustrating a flow of current in a second mode of FIG. 6.

Referring to FIG. 11, while a positive voltage is applied to the first terminal T1 and the second operation is performed, the input current may flow through the first terminal T1, the inductor L1, the first reverse-parallel diode RD1, the third capacitor C3 and the second diode D2 sequentially to the second terminal T2, and the resonance current may flow through the third node N3, the heating coil and the first reverse-parallel diode RD1 sequentially to the second node N2.

The second mode may be maintained during a period in which the controller 150 performs the second operation after completing the first operation and during a part of a period in which the controller 150 performs the third operation after completing the second operation.

That is, the second mode may be classified into a period in which the second operation is performed and a part of a period in which the third operation is performed after completing the second operation.

In response that the controller 150 performs a second operation after performing the first operation, the second switching element SW2 in an on state is changed to an off state.

As a result of performing the first operation for a preset period of time, the condition that the magnitude of the voltage charged in the third capacitor C3 is smaller than the magnitude of the voltage of the first node N1 is satisfied.

Since the voltage charged in the third capacitor C3 is smaller than the voltage at the first node N1, a current path flowing to the first reverse-parallel diode RD1 is formed. Accordingly, the input current and the resonance current flow through the first reverse-parallel diode RD1.

As described above, since both the input current and the resonance current flow through the first reverse-parallel diode RD1, the first reverse-parallel diode RD1 needs to have a current capacity sufficient to allow both the input current and the resonance current to flow at once.

According to various embodiments, the first switching element SW1 and the first reverse-parallel diode RD1 need to be implemented as components having the same current capacity.

Since a negative voltage is applied to the second terminal T2 when a positive voltage is applied to the first terminal T1, the second diode D2 may be conducted, and the second reverse-parallel diode RD2 may not be conducted. Accordingly, a current path flowing through the second diode D2 is formed, and the current flowing through the third capacitor C3 flows through the second diode D2 to the second terminal T2.

That is, in the second mode, the input current may flow through the first terminal T1, the inductor L1, the first reverse-parallel diode RD1, the third capacitor C3, and the second diode D2 sequentially to the second terminal T2.

In one embodiment, when the first switching element SW1 and the second switching element SW2 are in an off state, a boost power factor correction (PFC) circuit is formed by a structure of the inductor L1, the second switching element SW2, the first reverse-parallel diode RD1 and the third capacitor C3,

Accordingly, in a state in which the second switching element SW2 is turned off, the current charged in the inductor L1 is continuously discharged, the current discharged from the inductor L1 is charged in the third capacitor C3, and the charging voltage of the third capacitor C3 rises.

That is, in the second mode, the resonance current may flow through the third node N3, the heating coil, and the first reverse-parallel diode RD1 sequentially to the second node N2.

The value of the current flowing through the third capacitor C3 corresponds to the sum of half the value of the resonance current and the value of the input current.

When the controller 150 starts the third operation after completing the second operation, a zero voltage switching (ZVS) operation is established.

On the other hand, when the current charged in the inductor L1 is discharged to some extent, the amount of charge in the inductor L1 and the amount of charge in the first capacitor C1 are balanced so that the magnitude of the resonance current becomes zero.

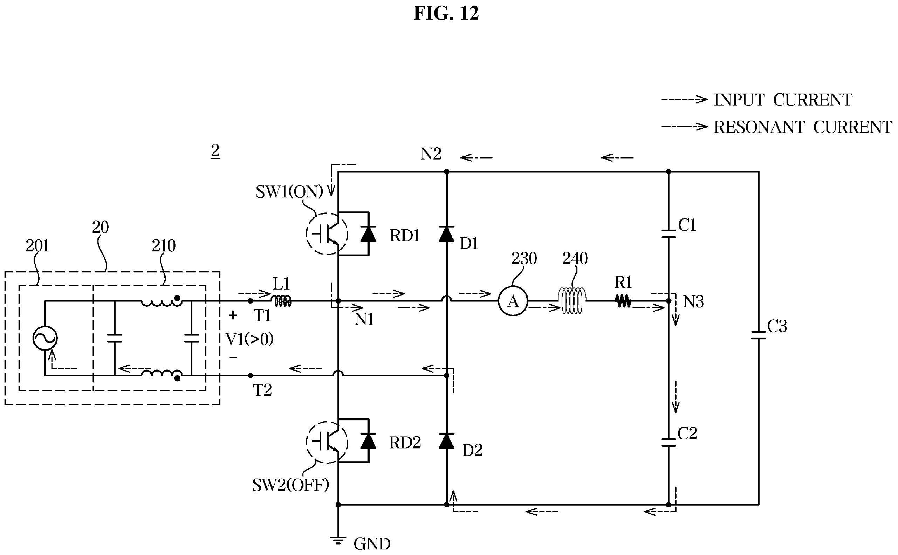

FIG. 12 is a view schematically illustrating a flow of current in a third mode of FIG. 6.

Referring to FIG. 12, while a positive voltage is applied to the first terminal T1 and the third operation is performed, an input current may flow through the first terminal T1, the inductor L1, the heating coil, the second capacitor C2, and the second diode D2 sequentially to the second terminal T2, and the resonance current may flow through the second node N2, the first switching element SW1 and the heating coil sequentially to the third node N3.

When a predetermined time has elapsed after the controller 150 starts the third operation, the magnitude of the resonance current may become 0, and the direction of the resonance current may be changed.

Accordingly, when a predetermined time has elapsed after the controller 150 starts the third operation, the first capacitor C1 starts to be discharged and the direction of the resonance current changes from the reverse direction to the forward direction.

That is, in the third mode, the resonance current flows through the second node N2, the first switching element SW1 and the heating coil sequentially to the third node N3.

As the direction of the resonant current is changed, the first reverse-parallel diode RD1 is not conducted.

Accordingly, the input current flows to the heating coil together with the resonance current.

In addition, since the voltage of the first node N1 is higher than the voltage of the ground node GND, the second reverse-parallel diode RD2 is not conducted. On the other hand, since the voltage of the second terminal T2 is lower than the voltage of the ground node GND, the second diode D2 is conducted.

That is, in the third mode, the input current may flow through the first terminal T1, the inductor L1, the heating coil, the second capacitor C2, and the second diode D2 sequentially to the second terminal T2.

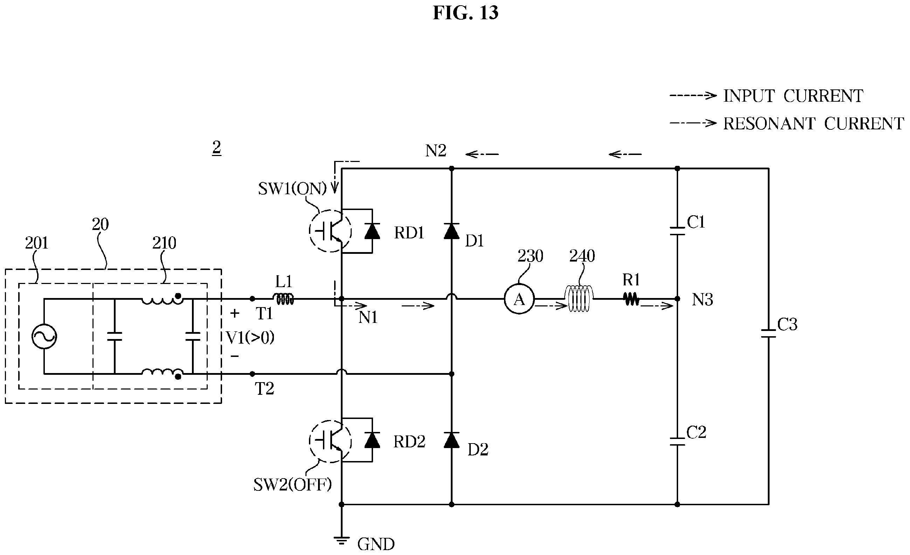

FIG. 13 is a view schematically illustrating a flow of current in a fourth mode of FIG. 6.

Referring to FIG. 13, while a positive voltage is applied to the first terminal T1 and the third operation is performed, the resonance current may flow through the second node N2, the first switching element SW1 and the heating coil sequentially to the third node N3 in a state in which the input current does not flow.

When a predetermined time has elapsed after the controller 150 starts the third operation, the current charged in the inductor L1 is completely discharged.

When the current charged in the inductor L1 is completely discharged, the input current no longer flows, the first capacitor C1 is discharged, and a resonance current flows.

Accordingly, in a state in which the input current does not flow, the resonance current may flow through the second node N2, the first switching element SW1 and the heating coil sequentially to the third node N3.

In the fourth mode, the magnitude of the current flowing through the third capacitor C3 is equal to the magnitude of the current flowing through the first capacitor C1.

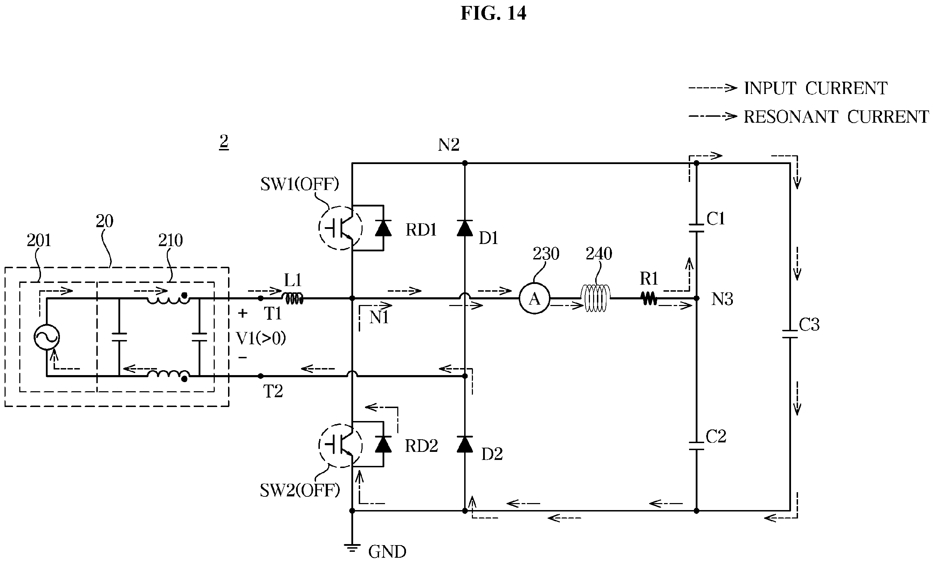

FIG. 14 is a view schematically illustrating a flow of current in a fifth mode of FIG. 6.

Referring to FIG. 14, while a positive voltage is applied to the first terminal T1 and the second operation is performed, an input current may flow through the first terminal T1, the inductor L1, the heating coil, the first capacitor C1, the third capacitor C3 and the second diode D2 sequentially to the second terminal T2, and the resonance current may flow through the ground node GND, the second switching element SW2 and the heating coil sequentially to the third node N3.

When the controller 150 starts the second operation after completing the third operation, the current charged in the heating coil is discharged into the first capacitor C1 and the second capacitor C2.

Accordingly, the magnitude of the voltage of the first node N1 becomes smaller than zero, and thus the input current starts to flow again.

In this case, since the voltage charged in the third capacitor C3 is greater than the voltage at the first node N1, the first reverse-parallel diode RD1 is not conducted, and thus the input current may flow through the first terminal T1, the inductor L1, the heating coil, the first capacitor C1, the third capacitor C3 and the second diode D2 sequentially to the second terminal T2.

Meanwhile, the magnitude of the voltage of the first node N1 becomes smaller than 0 so that the second reverse-parallel diode RD2 is conducted, and thus the resonance current may flow through the ground node GND, the second switching element SW2 and the heating coil sequentially to the third node N3.

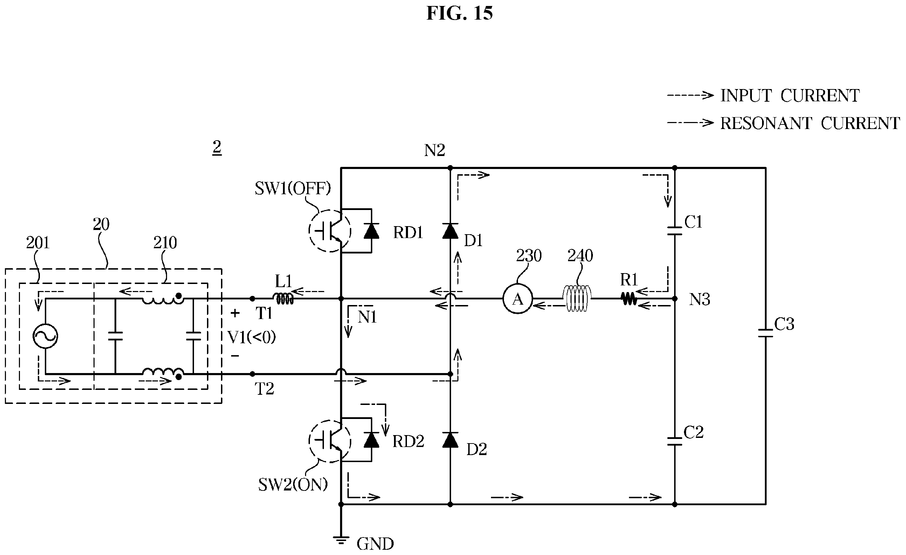

FIG. 15 is a view schematically illustrating a flow of current in a sixth mode of FIG. 7.

Referring to FIG. 15, while a negative voltage is applied to the first terminal T1 and the first operation is performed, the input current may flow through the second terminal T2, the first diode D1, the first capacitor C1, the heating coil and the inductor L1 sequentially to the first terminal T1, and the resonance current may flow through the third node N3, the heating coil and the second switching element SW2 sequentially the ground node GND.

When a negative voltage is applied to the first terminal T1, a positive voltage is applied to the second terminal T2. When a condition that the voltage applied to the second terminal T2 is greater than the voltage charged in the third capacitor C3 is satisfied, the first diode D1 is conducted. In addition, the second diode D2 and the second reverse-parallel diode RD2 are not conducted according to a voltage condition.

Accordingly, the input current flows through the second terminal T2, the first diode D1, the first capacitor C1, the heating coil, and the inductor L1 sequentially to the first terminal T1.

Meanwhile, since the first switching element SW1 is in an off state, the resonance current flows to the ground node GND through the heating coil and the second switching element SW2.

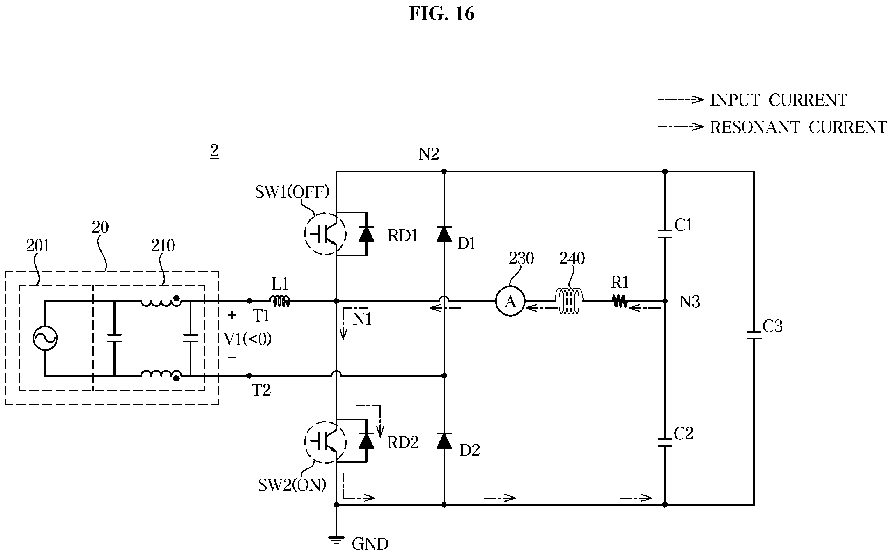

FIG. 16 is a view schematically illustrating a flow of current in a seventh mode of FIG. 7.

Referring to FIG. 16, while a negative voltage is applied to the first terminal T1 and the first operation is performed, a resonant current may flow through the third node N3, the heating coil and the second switching element SW2 sequentially to the ground node GND in a state in which the input current does not flow.

When a predetermined time has elapsed after the controller 150 starts the first operation, the current charged in the inductor L1 is completely discharged.

When the current charged in the inductor L1 is completely discharged, the input current no longer flows, the second capacitor C2 is discharged, and a resonance current flows.

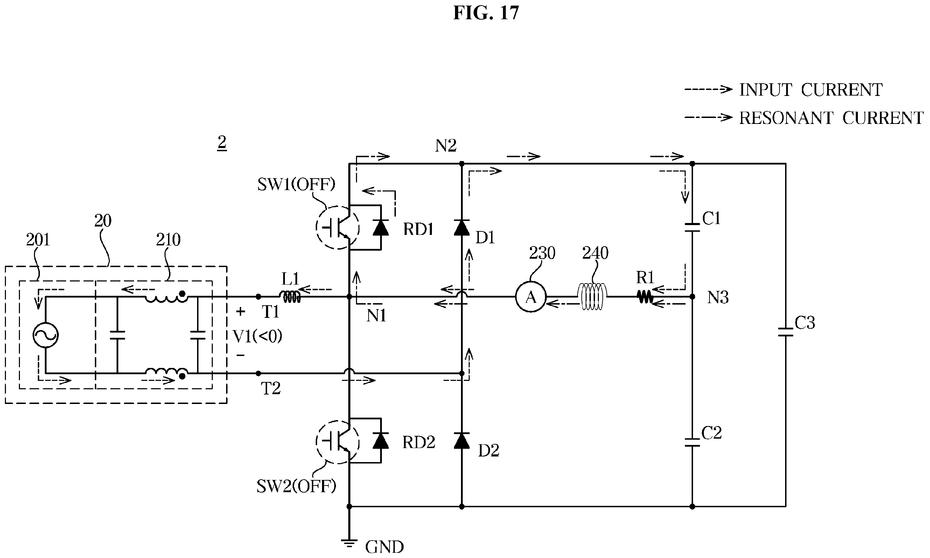

FIG. 17 is a view schematically illustrating a flow of current in an eighth mode of FIG. 7.

Referring to FIG. 17, while a negative voltage is applied to the first terminal T1 and the second operation is performed, the input current may flow through the second terminal T2, the first diode D1, the first capacitor C1, the heating coil and the inductor L1 sequentially to the first terminal T1, and a resonance current may flow from the third node N3, the heating coil and the switching element sequentially to the second node N2.

When the controller 150 performs the second operation after completing the first operation, the second switching element SW2 in an on-state is switched to an off-state.

As the second switching element SW2 is switched to an off state, the first reverse-parallel diode RD1 is conducted, and the resonant current directed to the ground node GND through the second switching element SW2 in the seventh mode is caused to flow to the second node N2 through the first reverse-parallel diode RD1.

In addition, as the second switching element SW2 is switched to an off state, the first diode D1 is conducted, and the input current flows through the second terminal T2, the first diode D1, the first capacitor C1, the heating coil and inductor L1 sequentially to the second terminal T2.

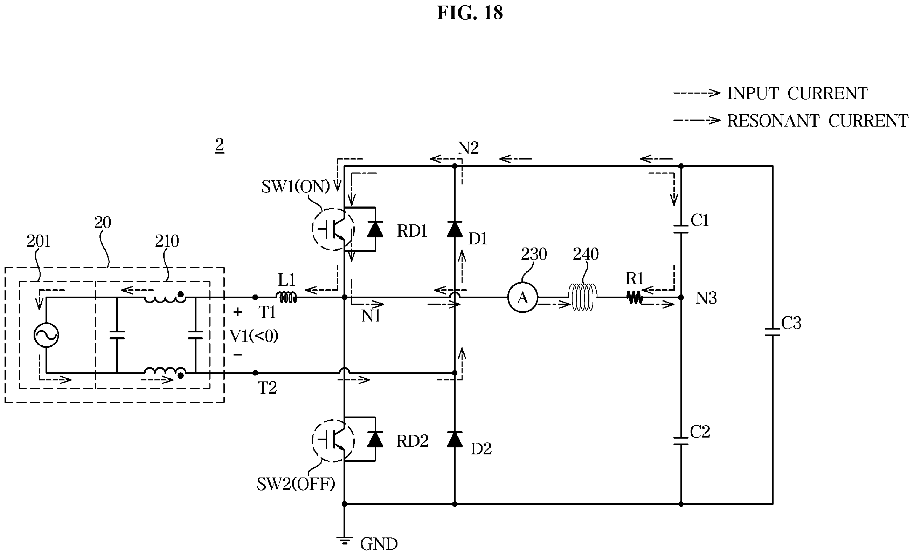

FIG. 18 is a view schematically illustrating a flow of current in a ninth mode of FIG. 7.

Referring to FIG. 18, while a negative voltage is applied to the first terminal T1 and the third operation is performed, an input current may flow through the second terminal T2, the first diode D1, the first switching element SW1, and the inductor L1 sequentially to the first terminal T1, and the resonance current may flow through the second node N2, the first switching element SW1 and the heating coil sequentially to the third node N3.

When the controller 150 performs the third operation after completing the second operation, the first switching element SW1 in an off state is switched to an on state.

Accordingly, the resonance current and the input current may flow through the first switching element SW1.

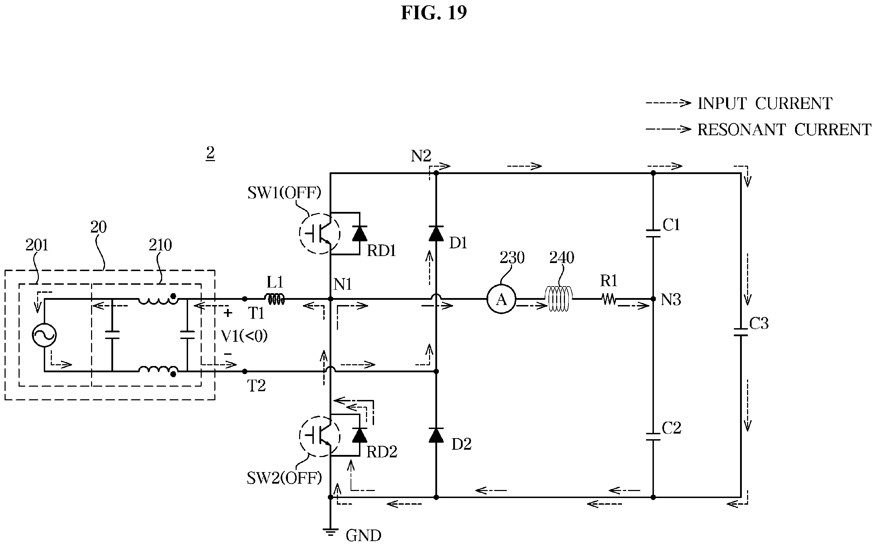

FIG. 19 is a view schematically illustrating a flow of current in a tenth mode of FIG. 7.

Referring to FIG. 19, while a negative voltage is applied to the first terminal T1 and the second operation is performed, the input current may flow through the second terminal T2, the first diode D1, the third capacitor C3, the second reverse-parallel diode RD2 and the inductor L1 sequentially to the first terminal T1, and the resonance current may flow through the ground node GND, the second reverse-parallel diode RD2 and the heating coil sequentially to the third node N3.

When the controller 150 performs the second operation after completing the third operation, the first switching element SW1 in an on state is switched to an off state.

As the first switching element SW1 is switched to an off state, the second reverse-parallel diode RD2 is conducted, the resonant current directed from the second node N1 to the first node N1 through the first switching element SW1 in the ninth mode is caused to flow from the ground node GND to the first node N1 through the second reverse-parallel diode RD2.

In addition, as the first switching element SW1 is switched to an off state, the input current may not flow to the first switching element SW1, and may flow through the second terminal T2, the first diode D1, the third capacitor C3, the second reverse-parallel diode RD2 and the inductor L1 sequentially to the first terminal T 1.

According to the present disclosure, since the magnitude of the resonance current passing through the heating coil is maintained at a constant value, noise generated when heating the vessel may be reduced.

In addition, according to the present disclosure, since the magnitude of the resonance current passing through the heating coil is maintained at a constant value, a vessel having low magnetic permeability may be efficiently heated.

In addition, according to the present disclosure, since the voltage is caused to rise by the third capacitor, the output may be increased even when switching elements having a fixed current capacity are used.

Meanwhile, the disclosed embodiments may be embodied in the form of a recording medium storing instructions executable by a computer. The instructions may be stored in the form of program code and, when executed by a processor, may generate a program module to perform the operations of the disclosed embodiments. The recording medium may be embodied as a computer-readable recording medium.

The computer-readable recording medium includes all kinds of recording media in which instructions which may be decoded by a computer are stored, for example, a Read Only Memory (ROM), a Random Access Memory (RAM), a magnetic tape, a magnetic disk, a flash memory, an optical data storage device, and the like.

In addition, the computer-readable recording medium may be provided in the form of a non-transitory storage medium. Here, when a storage medium is referred to as "non-transitory," it may be understood that the storage medium is tangible and does not include a signal (electromagnetic waves), but rather that data is semi-permanently or temporarily stored in the storage medium. For example, a "non-temporary storage medium" may include a buffer in which data is temporarily stored.

According to one embodiment, the methods according to the various embodiments disclosed herein may be provided in a computer program product. The computer program product may be traded between a seller and a buyer as a product. The computer program product may be distributed in the form of a machine-readable storage medium (e.g., compact disc read only memory (CD-ROM)), or may be distributed through an application store (e.g., Play StoreTM) online. In the case of online distribution, at least a portion of the computer program product may be stored at least semi-permanently or may be temporarily generated in a storage medium, such as a memory of a server of a manufacturer, a server of an application store, or a relay server.

Although embodiments of the present disclosure have been described with reference to the accompanying drawings, those skilled in the art will appreciate that these inventive concepts may be embodied in different forms without departing from the scope and spirit of the disclosure, and should not be construed as limited to the embodiments set forth herein.

## Claims

1. An induction heating device comprising:
a first node, a second node, and a third node;
a power supply module having a first terminal and a second terminal;
an inductor connected between the first terminal and the first node;
a first switching element connected between the first node and the second node;
a first reverse-parallel diode connected to the first switching element;
a second switching element connected between the first node and a ground node;
a second reverse-parallel diode connected to the second switching element;
a first diode having a first cathode connected to the second node and a first anode connected to the second terminal;
a second diode having a second cathode connected to the second terminal and a second anode connected to the ground node;
a first capacitor connected to the second node and the third node;
a second capacitor connected to the third node and the ground node;
a third capacitor connected to the second node and the ground node; and
a heating coil connected between the first node and the third node.

2. The induction heating device of claim 1, further comprising a current sensor connected between the first node and the third node.

3. The induction heating device of claim 1, further comprising a resistor connected between the first node and the third node.

4. The induction heating device of claim 1, wherein the power supply module includes an alternating current (AC) power supply and a filter configured to remove noise components included in the AC power supply.

5. The induction heating device of claim 1, further comprising a controller configured to control the first switching element and the second switching element.

6. The induction heating device of claim 5, wherein the controller is configured to perform
a first operation of turning off the first switching element and turning on the second switching element;
a second operation of turning off the first switching element and the second switching element; and
a third operation of turning on the first switching element and turning off the second switching element.

7. The induction heating device of claim 6, wherein the controller is configured to repeatedly perform a sequence of the second operation, the first operation, the third operation, and the second operation.

8. The induction heating device of claim 6, wherein a first period of the first operation and a third period of the third operation are each longer than a second period of the second operation.

9. The induction heating device of claim 6, wherein the controller is configured to,
based on a start of a heating operation, maintain the first switching element and the second switching element in an off state for a predetermined time, and
in response to a positive voltage being applied to the first terminal while the first switching element and the second switching element are maintained in the off state, an input current flows through the first terminal, the inductor, the first reverse-parallel diode, the third capacitor, and the second diode sequentially to the second diode.

10. The induction heating device of claim 6, wherein the controller is configured to,
based on a start of a heating operation, maintain the first switching element and the second switching element in an off state for a predetermined time, and
in response to a negative voltage being applied to the first terminal while the first switching element and the second switching element are maintained in the off state, an input current flows through the second terminal, the first diode, the third capacitor, the second reverse-parallel diode, and the inductor sequentially to the second diode.

11. The induction heating device of claim 6, wherein while a positive voltage is applied to the first terminal and the first operation is performed, an input current flows through the first terminal, the inductor, the second switching element, and the second diode sequentially to the second terminal, and
a resonant current flows through the third node, the heating coil and the second switching element sequentially to the ground node.

12. The induction heating device of claim 6, wherein while a positive voltage is applied to the first terminal and the second operation is performed, an input current flows through the first terminal, the inductor, the first reverse-parallel diode, the third capacitor, and the second diode sequentially to the second terminal, and
a resonant current flows through the third node, the heating coil and the first reverse-parallel diode sequentially to the second node.

13. The induction heating device of claim 6, wherein while a positive voltage is applied to the first terminal and the third operation is performed, an input current flows through the first terminal, the inductor, the heating coil, the second capacitor, and the second diode sequentially to the second terminal, and
a resonant current flows through the second node, the first switching element, and the heating coil sequentially to the third node.

14. The induction heating device of claim 6, wherein while a positive voltage is applied to the first terminal and the third operation is performed, a resonant current flows through the second node, the first switching element, and the heating coil sequentially to the third node in a state in which an input current does not flow.

15. The induction heating device of claim 6, wherein while a positive voltage is applied to the first terminal and the second operation is performed, an input current flows through the first terminal, the inductor, the heating coil, the first capacitor, the third capacitor, and the second diode sequentially to the second terminal, and
a resonant current flows through the ground node, the second switching element, and the heating coil sequentially to the third node.
